# EUROPEAN PATENT APPLICATION

(11) **EP 4 554 033 A1**
(43) Date of publication of application: **14.05.2025**
(21) Application number: 23208299.0
(22) Date of filing: 07.11.2023
(51) Int. Cl.: H02J 3/32, H02J 3/38

(54) **CONTROL UNIT FOR ENERGY SYSTEM**

(71) Applicant: Energie Genie Ltd, London EC1V 2NX (GB)
(72) Inventor: Rees, Oliver, London, EC1V 2NX (GB)
(74) Representative: Schlich

(57) **Abstract**

An electrical energy storage system is provided characterised in that the system further comprises a control that retrieves information from one or more external data sources; the control unit receives information from the inverter in respect of output of the renewable energy source, the state of charge of the replenishable energy store, and energy usage; the control unit assesses the received information; the control unit determines whether the predicted daily output of the renewable energy source and the state of charge of the replenishable energy store is sufficient to meet the predicted daily energy usage; and the control unit directs the inverter: if there is a predicted surplus, to store surplus energy in the replenishable energy store and/or export energy to the grid; and if there is a predicted deficit, to import energy from the replenishable energy store and/or the grid.

Also provided are a control unit for an electrical energy storage system, and methods of optimising energy efficiency in an electrical energy storage system or maximising return from an electrical energy storage system.

## Description

### Introduction

The present invention concerns an electrical energy storage system (EESS), for example battery energy storage system (BESS), and particularly a control unit for such a system.

The present invention also concerns methods of optimising energy efficiency in an electrical energy storage system or maximising return from an electrical energy storage system.

### Background

Electrical energy storage systems are widely used in domestic and commercial settings. Such systems may include a replenishable energy store such as a battery to store electricity locally for later use. Increasingly, such systems also include an element of local electricity generation, typically from a renewable energy source. This can provide continuity of supply in the event of disruptions to the power grid and can provide a degree of self-sufficiency.

EESS generally include an inverter to convert direct current (DC) from the renewable energy source and/or the replenishable energy store to alternating current (AC) in sinusoidal form synchronised to the grid frequency so that locally stored or generated electricity can supplement or substitute energy imported form the grid to meet local energy usage requirements. Inverters are typically provided with intelligent control systems to manage energy charging and discharging cycles.

However, known systems do not allow for the management of variable output of the renewable energy source, for example due to changing weather conditions. Known systems may therefore fail to maximise the use of renewable energy and or unnecessarily import energy from the grid. If energy suppliers use a variable tariff, this may also give rise to increased costs if energy is imported from the grid at a higher tariff and subsequently exported at a lower tariff.

Thus, there is a need for EESSs having improved efficiency, and improved system performance.

An object of the present invention is to provide an EESS having improved efficiency and/or improved performance. Another object of the present invention is the provision of an EESS that maximises the uses or renewable energy and/or minimises the need to import energy from the grid. Another object of the present invention is to provide a control unit for an EESS that provides for these objects. A further object is the provision of methods of optimising energy efficiency in EESS or maximising return from an EESS.

### Summary of the Invention

Accordingly, a first aspect of the invention provides an electrical energy storage system comprising:
- a renewable energy source;
- an inverter for interconversion of direct current (DC) and mains frequency alternating current (AC);
- a replenishable energy store; and
- a connection to a mains power grid,
characterised in that the system further comprises a control unit in communication with the inverter, wherein
a) the control unit retrieves information from one or more external data sources;
b) the control unit receives information from the inverter in respect of output of the renewable energy source, the state of charge of the replenishable energy store, and energy usage;
c) the control unit assesses the received information from a) and b);
d) the control unit determines whether the predicted daily output of the renewable energy source and the state of charge of the replenishable energy store is sufficient to meet the predicted daily energy usage; and
e) the control unit directs the inverter:
   (i) if there is a predicted surplus, to store surplus energy in the replenishable energy store and/or export energy to the grid;
   (ii) if there is a predicted deficit, to import energy from the replenishable energy store and/or the grid.

Any suitable renewable energy source may be used, but typically the renewable energy source is a photovoltaic array (i.e. solar power) or a micro wind turbine. Suitable renewable energy sources are widely available, e.g. for domestic applications. In some embodiments, the system may include more than one renewable energy source (e.g. both solar and wind).

Inverters for interconversion of direct current (DC) and mains frequency alternating current (AC) are widely available and used in the context of EESSs including BESSs. Grid connected inverters typically supply AC electricity in sinusoidal form, synchronized to the grid frequency, limit feed in voltage to no higher than the grid voltage and disconnect from the grid if the grid voltage is turned off. Preferably, the inverter is an intelligent hybrid inverter. Intelligent hybrid inverters typically manage the renewable energy source, replenishable energy store and grid, and may contain a communications device (data logger) allowing communication with the manufacturer and data display and/or user control of inverter functionality via a mobile app. Typically, data including status information, and energy usage data is communicated with the manufacturer and/or the user. The communication device also allows the manufacturer to provide periodic updates, such as software or firmware updates.

The replenishable energy store is typically a rechargeable battery. Suitable batteries are widely known and used in BESSs. Suitable batteries include a lithium-ion battery, a nickel-cadmium battery, a lead-acid battery or a flow battery. In the present disclosure, the terms replenishable energy store and battery may be used interchangeably.

The EESS is typically provided with other standard system components, which are well-known in the art, such as a consumer unit (fuse box) and a meter or meters for measuring energy imported from the grid and exported to the grid.

Optional further components may be included in the system. For example, the system may be used for heating water in a pool or hot tub, preferably using excess renewable energy to do so to minimise importing energy from the grid. As a further example, the system may include a charging point for an electric vehicle (EV). Again, the system can be used to preferentially use the output of the renewable energy source to charge the EV. The battery of the EV may also be used in some embodiments as an additional replenishable additional energy store, thus providing additional flexibility during periods when the output of the renewable energy source is insufficient to meet current or predicted energy demand.

The control unit is typically connected to a communications port on the inverter but may alternatively be connected by a WiFi connection. In use, the control unit intercepts information communicated by the inverter to its communications device (e.g. a data logger) in order to modify operation of the inverter based on additional information obtained from the external data sources. This connection typically does not interrupt communications to and from the inverter, for example to allow the manufacturer to provide software or firmware updates to the inverter and to allow continued data display and communication with the inverter using a mobile app, if provided by the inverter manufacturer.

Connection of the control unit to the inverter is possible using the API technical information provided by the manufacturers of inverters and the corresponding key. This allows the control unit to interact with the inverter and system software and allows the control unit to issue directions or commands to the inverter. Preferably, the control unit is programmed with a plurality of system languages, enabling the control unit to be used in conjunction with inverters from different manufacturers. Optionally, system language selection is provided as an option during set-up of the control unit whereby the user selects the relevant system from a list. The set-up process optionally includes selection of other system information, such as renewable energy source, inverter type and/or battery capacity.

The external data sources may include one or more of weather forecast data, solar forecast data, atmospheric data, regional data, postcode-specific data, and data in respect of the grid status. In more detail, the data sources may be online forecast data or monitoring data, for example data provided by meteorological agencies, local or national government sources and/or energy suppliers. Weather forecast data may include current and predicted information in respect of cloud cover, wind speed, wind direction, precipitation, temperature and the like. Solar forecast data may include current and predicted information in respect of daylight hours, sunrise and sunset times, solar strength, UV index and the like. Atmospheric data may include current and predicted information in respect of atmospheric pollution, e.g. in the form of a pollution index. Regional and postcode specific data may include weather alerts and warnings (e.g. in respect of strong winds, rainfall, snow and ice, and the like), environmental warnings (e.g. in respect of flooding), and other warnings relating to planned or unplanned disruptions to the local energy supply. Data in respect of the grid status may include information relating to current and predicted energy demand, periods of peak demand, disruptions to the local energy supply, and the like.

Typically, the control unit will receive energy from the external sources at regular intervals, for example step a) may be repeated every 15 minutes, every 30 minutes, every 45 minutes or every 60 minutes. The interval may be varied, for example by increasing the frequency when the sources indicate that one or more monitored parameters are undergoing rapid change and reducing the frequency when one or more monitored parameters are not undergoing significant change, i.e. in periods of relative stability.

On receiving information from the one or more external energy sources and from inverter (e.g. in respect of output of the renewable energy source, the state of charge of the replenishable energy store, and energy usage), the control unit will assess the received information, determine current and predicted needs and direct the inverter to route energy within the system based on user-operable settings, for example to maximise usage of energy generated by the renewable energy source, reduce dependence on the grid and/or maintain the state of charge of the replenishable energy store at a predetermined level. Additionally, or alternatively, the control unit will take into account tariff information, for example to preferentially import energy from the grid when it is least expensive to do so and/or to export energy to the grid when the supplier pays a higher rate and/or there is greater demand on the grid. This not only provides a cost benefit to the user, but also served the wider area by reducing demand on the grid at peak times and/or exporting energy to the grid at peak times, thus reducing the overall burden on the energy supplier.

It is envisaged that the control unit will be provided with appropriate software for running an algorithm controlling the assessing, determining and directing of steps c), d) and e). Preferably, the control unit will have artificial intelligence (AI) or machine learning capacity, so that it improves its performance over time, for example as it receives further data from the one or more external sources and from the inverter. This can be achieved by training an existing AI model with relevant data sets from EESS users. Thus, previously received external data and data in respect of the past performance of the system in combination with present and predicted values for one or more of the monitored parameters will inform the behaviour of the control unit. For example, daily data sets from multiple users obtained over a prolonged period, for example several years, can be used to train the AI with trends and behavioural patterns to inform the behaviour of the control unit.

Typically steps b) to e) are repeated at an interval in the range of every 30 seconds to every 5 minutes, for example every 1 minute, every 2 minutes, every three minutes, every 4 minutes or every 5 minutes. This allows the system to constantly monitor performance, and assess, determine and direct the activity of the inverter to ensure maximum efficiency and/or achievement of user-determined objectives. For example, the control unit may find that current output from the renewable energy source is insufficient to meet current demand, but that the output will increase throughout the day based on forecast data from the external sources (e.g. in the case that the renewable source is photovoltaic panels and . In this scenario, the control unit may determine that the state of charge of the replenishable energy store is sufficient to meet the current deficit and can be replenished when the output of the renewable energy source increases, and therefore direct the inverter to draw energy from the replenishable energy store rather than importing energy from the grid.

Optionally, the control unit is connected to and in communication with a remote server. The connection may be, for example, via WiFi or a cabled LAN system. The remote server can provide additional processing power or backup processing power for the control unit. In some embodiments, this allows the control unit to make more rapid decisions. In other embodiments, the remote server provides additional input, for example postcode based weather warnings. This allows the control unit to ensure that the replenishable energy store is charged before any disruption to the grid power supply (e.g. power cuts during storms). This may be particularly advantageous in remote regions where the grid supply is more vulnerable to disruptions.

The remote server optionally collects and pools information from the control units of two or more energy storage systems and communicates the pooled data to each control unit. By pooling information from multiple units, the remote server can build more complete data for a given location and share this with the control units of individual systems, thereby improving the performance of each system in the pool.

Optionally, the control unit can be controlled using a mobile app, which may be used to provide one or more of initial set-up, subsequent modification of system or operating settings, display of system information, and notification of system or external warnings (e.g. in respect of adverse weather, local supply disruptions and the like).

A second aspect of the invention provides a control unit for an electrical energy storage system according to the first aspect. It is envisaged that the control unit can be provided as part of an EESS or separately, e.g. as an additional component that can be retrofitted to an existing system as described in relation to the first aspect.

A third aspect of the invention provides a method of optimising energy efficiency in an electrical energy storage system according to the first aspect of the invention, wherein the control unit is configured to:
a) preferentially use the output of the renewable energy source to meet the predicted daily energy usage;
b) if the output of the renewable energy source exceeds the current energy usage, store the surplus output of the renewable energy source in the replenishable energy store until the state of charge of the replenishable energy store reaches a level equal to or in excess of the outstanding predicted daily energy usage; and
c) if the if the output of the renewable energy source exceeds the current energy usage, preferentially use the energy in the replenishable energy store over importing energy from the grid.

This represents a first operating mode or function, in which the system is configured to optimise energy efficiency. By drawing on multiple external data sources and repeated interrogation of these sources, and combining this with system information, the control unit can provide more accurate prediction of energy generation and usage and thus provide improved system efficiency. This is typically based on maximising usage of renewable energy and stored energy and minimising import of energy from the grid.

Typically, this function is based on analysis over a 24 hour period, for example from midnight to midnight. The control unit retrieves data from the external data sources and from the system at regular intervals, uses the combined data to predict energy generation from the renewable energy source and energy usage based on the household's typical usage patterns (e.g. 10-15 kWh per day), asks whether the predicted renewable energy, and additional energy stored in the replenishable energy store will be sufficient to meet the predicted energy needs.

An exemplary logic path is as follows:
- What is the predicted output of the renewable energy source?
- What is the state of charge of the battery?
- What is the predicted energy usage?
- If there is a deficit, is import of energy form the grid required?
- If no import is required, enter work mode and monitor energy generation, progress to target at regular intervals (e.g. every 30s or 60s).
- If there is a deficit, import energy from the grid when there is less demand or the tariff is lower (e.g. between 12am and 7am) and store in the battery until needed.
- When the battery reaches the required state of charge, the system reverts to work mode and regular monitoring.

Optionally, the method provides for import of energy from the grid (if needed) during times of reduced demand (off-peak periods) and export during times of high demand (peak periods). This advantageously provides smoothing of local energy demand.

Accordingly, the method optionally proved that if the control unit predicts a deficit, the control unit is additionally configured to import energy from the grid during periods of reduced demand on the grid. Optionally, the control unit is configured to maximise the state of charge of the replenishable energy store in response to data indicating a potential disruption to the grid. Optionally, the control unit is configured to preferentially export surplus energy to the grid at times of increased demand on the grid.

A fourth aspect of the invention provides a method of maximising return from an electrical energy storage system according to the first aspect of the invention, wherein energy from the grid is supplied according to a differential tariff and the control unit is configured to:
a) preferentially export surplus energy from the renewable energy source and/or from the replenishable energy store to the grid during high tariff periods; and
b) preferentially import energy from the grid to meet the predicted daily energy usage and/or to replenish the replenishable energy store to the required state of charge during low tariff periods.

This represents a second operating mode or function, based on energy trading. This mode is particularly suitable when energy is supplied on a variable tariff, with different charges for importing energy from the grid and/or exporting energy back to the grid at different periods (e.g. at peak and off-peak times).

Typically, the control unit assesses available and stored energy versus predicted energy usage as 24 hour period progresses, for example in the second half of a midnight to midnight day. If there is a predicted surplus, this is typically sold back to the grid during peak hours. This may be actively encouraged by the energy supplier as a consequence is reduced strain on the local energy supply network. Once energy transactions are complete or the optimal selling window has passed, the system typically reverts to working mode, as described above in relation to the third aspect of the invention.

### Brief Description of the Drawings

Fig. 1 shows a schematic view of a known EESS, without the control unit of the present invention;
Fig. 2 shows a corresponding schematic view of an exemplary EESS of the present invention;
Fig. 3 shows a simplified overview of an algorithm that can be used in conjunction with the control unit of the present invention; and
Fig. 4 shows energy usage graphs of (a) an EESS without a control unit according to the invention, (b) an EESS including a control unit according to the invention operating in the first mode described above without energy trading, and (c) and (d) an EESS including a control unit according to the invention operating in the second mode described above with energy trading.

### Detailed Description of the invention

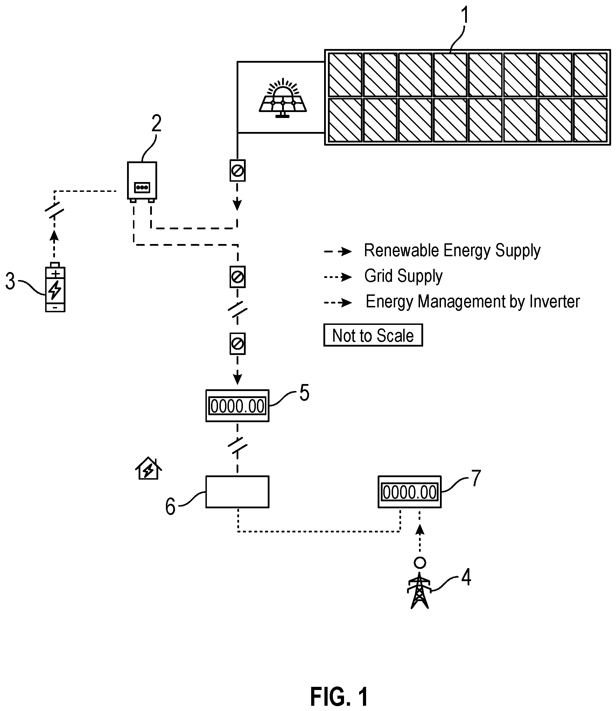

With reference to Fig. 1, a typical EESS known in the art comprises a renewable energy source (1), in this instance a solar photovoltaic array, which is connected to an inverter (2). The inverter is also connected to a replenishable energy store or battery (3) and to the mains power grid (4). As illustrated in Fig. 1, the connection to the grid is via a generation meter (5) which records energy exported from the EESS to the grid, a consumer unit (6) which comprises a fuse box and other standard safety features known in the art, and a grid meter (7) which records energy imported from the grid.

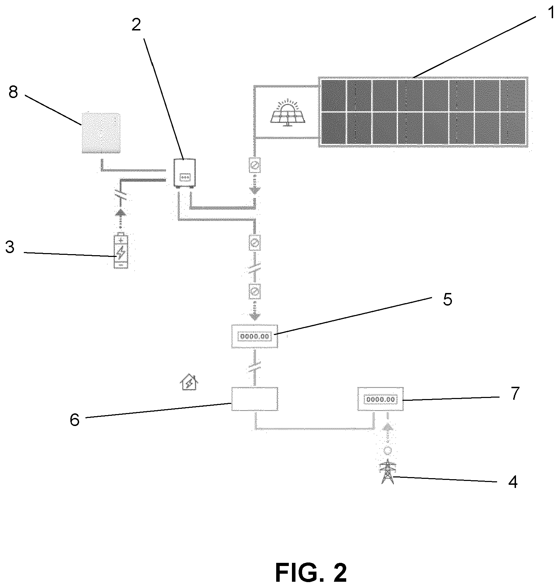

Fig. 2 shows a similar EESS to Fig. 1, but with the addition of a control unit (8) of the invention. As illustrated in Fig. 2, the control unit is physically connected to the inverter, although wireless connection as described above is also possible.

### Examples

The invention is now illustrated by way of the following non-limiting examples.

### Example 1 - Control Unit Algorithm

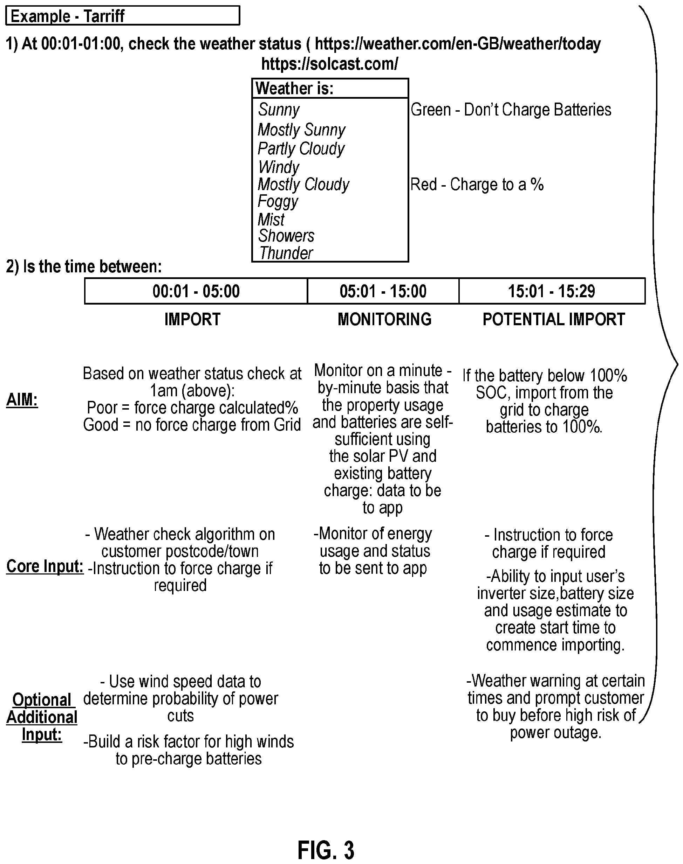

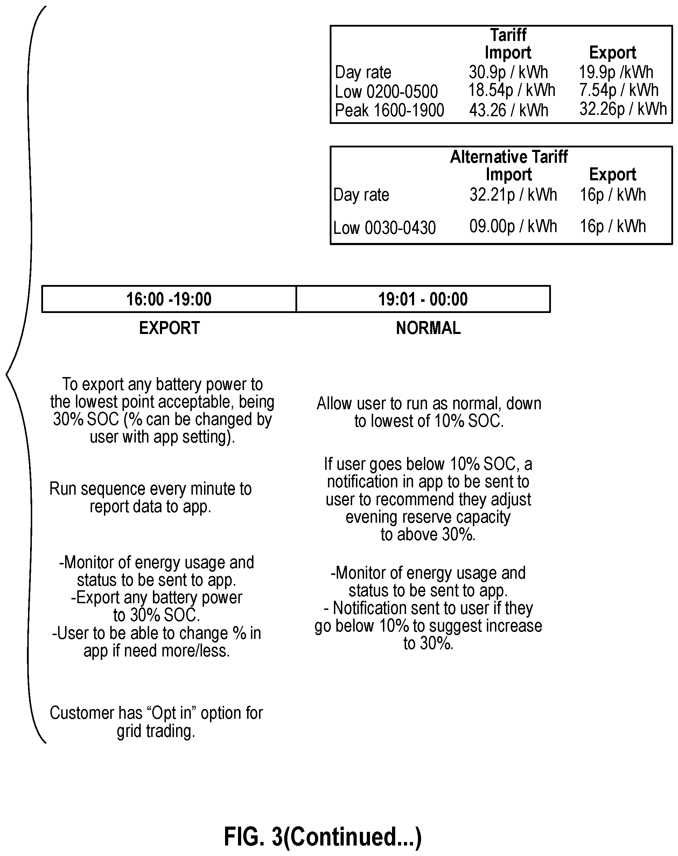

An exemplary AI algorithm that can be used in conjunction with the control unit of the invention is presented in simplified form in Fig. 3. This example is based on a differential tariff as shown in Table 1, in which the energy supplier has different charging rates for import and export of energy during an off-peak period of 0200 to 0500, a peak period of 1600 to 1900 and at other times (day rate). This example assumes a system as illustrated in Fig. 2, in which the renewable energy source is a solar photovoltaic (PV) array.

**Table 1:**

| | **Import** | **Export** |
|---|---|---|
| Day rate | 30.90p / kWh | 19.90p / kWh |
| Low rate (0200-0500) | 18.54p / kWh | 7.54p / kWh |
| Peak rate ((1600-1900) | 43.26p / kWh | 32.26p / kWh |

The algorithm can be modified for other tariff structures, such as the tariff shown below in Table 2, in which the supplier defines a low, off-peak rate and a day rate without defining a peak rate for energy imported from the grid and a flat rate for exported energy.

**Table 2:**

| | **Import** | **Export** |
|---|---|---|
| Day rate | 31.21p / kWh | 16.00p / kWh |
| Low rate (0200-0500) | 9.00p / kWh | 16.00p / kWh |

As shown in Fig. 3, the algorithm initially obtains weather status information from several sources and determines whether the battery needs to be charged by importing energy from the grid during the low rate window. If the forecast is for sunny, mostly sunny or partly cloudy weather, no input is required as the PV array is predicted to provide sufficient energy to meet the predicted demand. If, however, the forecast is for windy, mostly cloudy, foggy, misty, showers, thunder or other conditions in which output from the PV array will be reduced, the algorithm directs the system to import energy from the grid until the battery reaches a state of charge (SOC) sufficient to meet predicted demand.

At this initial stage, the algorithm interrogates the external sources of weather information based on the user's postcode or town and instructs the system to force charging of the battery if required. Optionally, the algorithm also processes information in respect of wind speeds and forces battery charging if the wind speeds indicate a risk factor for power disruption above a user- or system-defined threshold.

Next, after the tariff low rate window has closed and before the peak rate window opens, the algorithm operates in a monitoring mode. Monitoring is carried out minute-by-minute to determine whether the output of the PV array and energy stored in the battery is sufficient to provide for expected energy usage, and the data is sent to an app allowing the user to view the current status.

Next, immediately before the peak rate window opens (for example an hour before the peak rate window opens, dependent on battery size, inverter size and energy usage), the algorithm enters a potential import mode and assesses whether the battery is below 100% SOC and whether it is necessary to import energy from the grid before the peak rate window opens to meet demand. Typically, the user will input system details such as battery size, inverter size and/or estimated usage, allowing the algorithm to determine when to ender the potential import mode. Optionally, the algorithm processes information relating to weather warnings, and directs the system to import energy and/or sends a notification to the user asking if they wish to import energy before the peak period in view of the risk of disruption to the grid supply.

One the peak rate window opens, the algorithm enters export mode, where surplus energy is exported to the grid when the export rates are most favourable to the user. The algorithm assesses the battery SOC and directs export of energy to the grid if the SOC is higher than the minimum value necessary to meet the user's demand, for example 30% or 50% SOC. The minimum battery SOC may be set by the user, for example using the app, or may be calculated by the algorithm based on predicted energy input from the PV array and predicted energy usage. The sequence is run every minute, the situation assessed and data is sent to the app. Optionally, the user can control the setting to permit or not permit export of energy to the grid, for example if they wish to benefit from grid trading or if they prefer to prioritise self-sufficiency of the system.

During the final period of the day, after closure of the peak rate window, the algorithm reverts to "normal" mode. The system will run according to the user's standard settings unless the battery reaches a lower threshold SOC, for example 10%. If 10% SOC is reached, a notification is sent to the app, recommending that the user adjust the evening reserve capacity to above 30% SOC.

The whole process is then repeated for the next, and successive 24-hour periods.

### Example 2 - Energy Usage and Savings Forecasts

Energy usage values for a typical EESS without a control unit according to the invention and with a control unit of the invention operating both with and without energy trading were compared to assess the degree of saving a user would achieve by using the control unit. Data for a one-week period was obtained in May 2023 (spring), when performance of the PV array was estimated to be approximately 40-60% of the performance in July (summer).

The calculations were based on a system having a 4.50 kWp PV array, a 6.00 kWp inverter and a 10.65 kWp battery, with the annual yield from the PV array being 4855 kWh and the annual usage 2900 kWh. This system was capable of 33% self-sufficiency when used without battery storage, 80% self-sufficiency with battery storage, and 90-93% self-sufficiency when used with a control unit according to the invention.

Calculations were based on the information shown below in Table 3.

**Table 3:**

| **A. Installation data** | |
|---|---|
| Installed capacity of PV system - kWp | 4,300 kWp |
| Orientation of the PV system - degrees from South | 4° |
| Inclination of the system - degrees from horizontal | 35° |
| Postcode region | 2 |

| **B. Calculations** | |
|---|---|
| kWh/kWp (Kk) from table | 1129 |
| Shade Factor (SF) | 1.00 |
| Estimated annual output (kWp x Kk x SF) - kWh | 4855 |

| C. Estimated PV self-consumption - PV only | |
|---|---|
| Assumed occupancy archetype | Home all day |
| Assumed annual domestic energy consumption | 2800 kWh |
| Expected solar PV self-consumption (PV only) | 922 kWh |
| Grid electricity independence / self-sufficiency (PV only) | 33% |

| **D. Estimated PV self-consumption - with EESS** | |
|---|---|
| Assumed usable capacity of electrical energy storage device, which is used for self-consumption | 10.0 kWh |
| Expected solar PV self-consumption (with EESS) | 2282 kWh |
| Grid electricity independence / self-sufficiency (with EESS) | 81% |

The data obtained for the system used without the control unit, the system used with the control unit and energy trading, and the system used with the control unit without energy trading (with winter output from the PV array) are shown in Table 4.

The control unit used included an AI model that was trained with daily data sets from EESS systems from more than 75 users obtained over a period of 3-4 years. After this training, the control unit was trialled in an EESS installation to yield the data in Table 4.

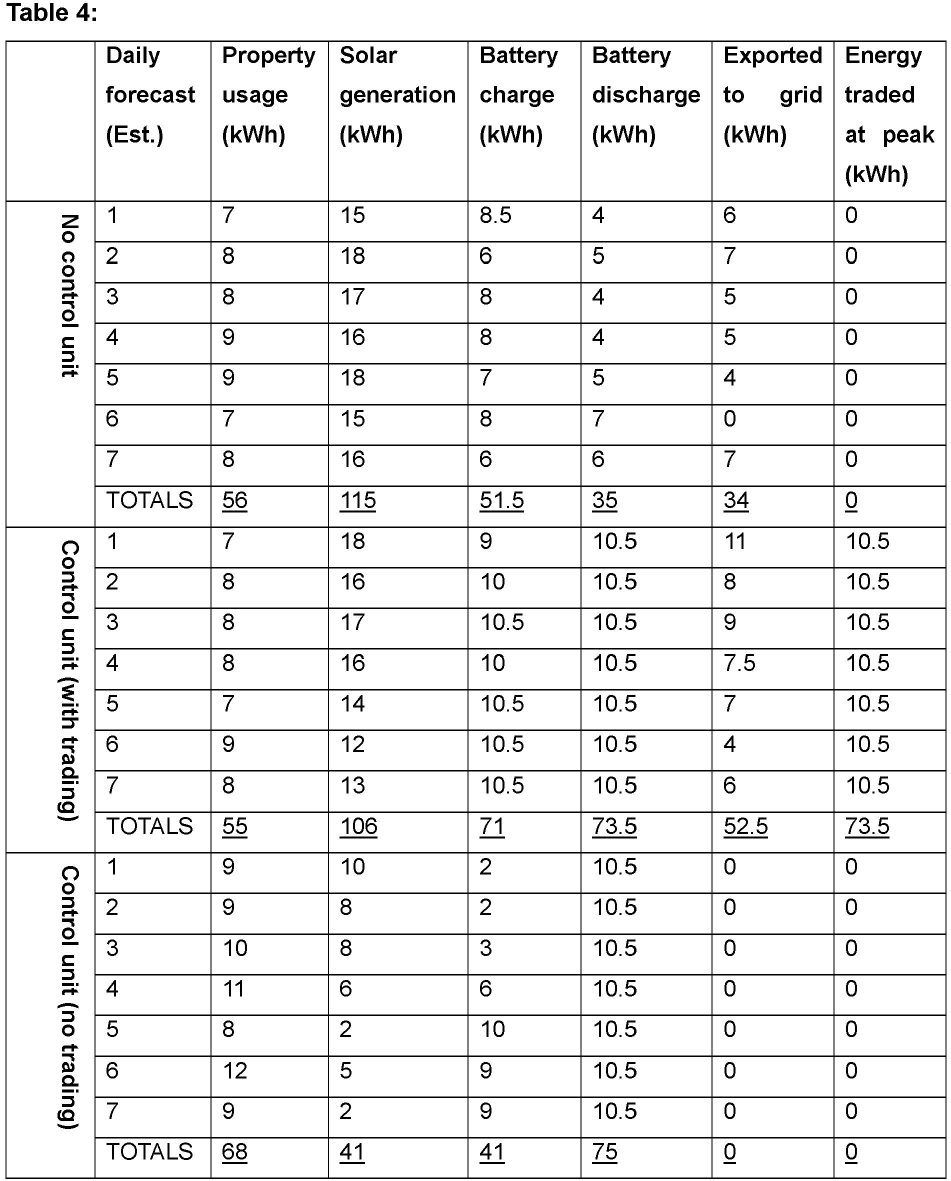

Further analysis of this data showed that addition of the control unit, with and without energy trading resulted in significant cost savings over the 7-day period, with projected annual savings of £816.92. The results of this analysis are shown in Table 5 below.

**Table 5:**

| **Solar PV + battery** | | |
|---|---|---|
| **Energy costs** | **kWh** | **Total** |
| Imported @ 30.59p | 0 | £0.00 |
| Exported @ 16p | 34 | £5.44 |
| Generated energy used | 120.5 | £36.86 |
| **Total saving** | | **£42.30** |

| **Solar PV + battery + control unit** | | |
|---|---|---|
| **Energy costs** | **kWh** | **Total** |
| Imported @30.59p | 0 | £0.00 |
| Imported @ 18.54p | 55 | £13.16 |
| Exported @ 19.9p | 52.5 | £10.45 |
| Generated energy used | 106 | £20.80 |
| Energy traded @38.50p | 73.5 | £28.30 |
| **Comparative saving** | | **£46.38** |
| **Control unit saving - solar PV saving** | (£58.01 - £42.30) | **£15.71** |

| **Energy costs** | **kWh** | **Total** |
|---|---|---|
| Imported @ 30.59p | 68 | £20.80 |
| Imported @ 9p | 41 | £3.69 |
| Exported @ 16p | 0 | £0.00 |
| Generated energy used | 68 | £20.80 |
| Energy traded @ 38.50 | 0 | £0.00 |
| **Comparative saving** | | **£24.49** |
| **FORECASTED ANNUAL SAVING** | | **£816.92** |

This shows that systems including a control unit according to the invention reduce reliance on imported energy from the grid, increase self-sufficiency of the system and, with energy trading, further reduce costs.

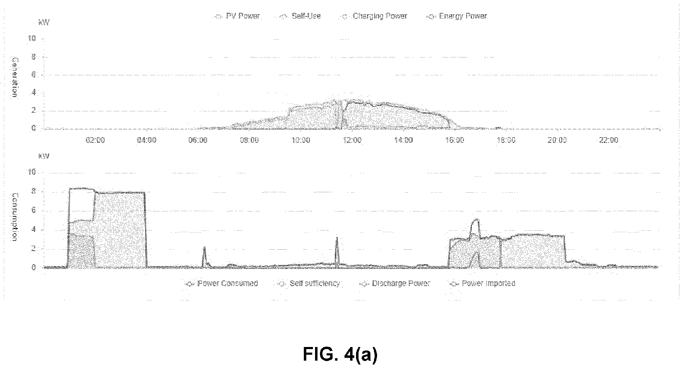

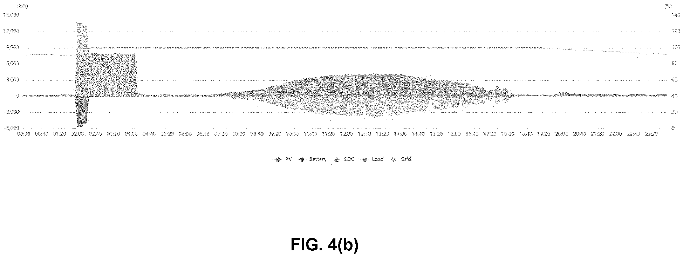

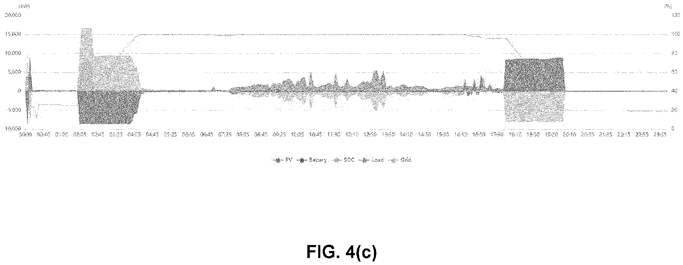

Energy usage was also monitored and graphs were prepared showing (a) an EESS without a control unit according to the invention, (b) an EESS including a control unit according to the invention operating in the first mode described above without energy trading, and (c) and (d) an EESS including a control unit according to the invention operating in the second mode described above with energy trading - see Fig. 4(a) to 4(d).

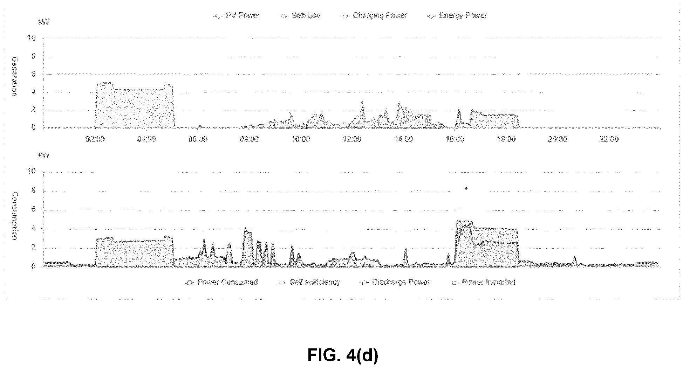

It can be seen, for example, from Fig. 4(d) that under conditions where the PV array is not able to provide sufficient energy to meet the needs of the property and energy from the grid must be imported to meet these needs, the control unit reduces the total energy costs by predicting shortfalls in energy generated by the PV array and/or stored in the battery, taking advantage of less expensive time of use (ToU) tariffs to import energy from the grid, and providing a reliable platform to manage energy generation, storage and usage.

Accordingly, the invention provides an electrical energy storage system, an associated control unit and methods for optimising energy efficiency or maximising return from an electrical energy storage system of the invention.

## Claims

1. An electrical energy storage system comprising:
• a renewable energy source;
• an inverter for interconversion of direct current (DC) and mains frequency alternating current (AC);
• a replenishable energy store; and
• a connection to a mains power grid,
**characterised in that** the system further comprises a control unit in communication with the inverter, wherein
f) the control unit retrieves information from one or more external data sources;
g) the control unit receives information from the inverter in respect of output of the renewable energy source, the state of charge of the replenishable energy store, and energy usage;
h) the control unit assesses the received information from a) and b);
i) the control unit determines whether the predicted daily output of the renewable energy source and the state of charge of the replenishable energy store is sufficient to meet the predicted daily energy usage; and
j) the control unit directs the inverter:
(i) if there is a predicted surplus, to store surplus energy in the replenishable energy store and/or export energy to the grid;
(ii) if there is a predicted deficit, to import energy from the replenishable energy store and/or the grid.

2. An electrical energy storage system according to claim 1, wherein external data sources include one or more of weather forecast data, solar forecast data, atmospheric data, regional data, postcode-specific data, and data in respect of the grid status.

3. An electrical energy storage system according to claim 1 or claim 2, wherein step a) is repeated every 15 minutes, every 30 minutes, every 45 minutes or every 60 minutes.

4. An electrical energy storage system according to any one of claims 1-3, wherein steps b) to e) are repeated at an interval in the range of every 30 seconds to every 5 minutes.

5. An electrical energy storage system according to any one of claims 1-4, wherein the control unit is connected to and in communication with a remote server.

6. An electrical energy storage system according to claim 5, wherein the remote server collects and pools information from the control units of two or more energy storage systems and communicates the pooled data to each control unit.

7. An electrical energy storage system according to any one of claims 1-6, wherein the renewable energy source is a photovoltaic array or a micro wind turbine.

8. An electrical energy storage system according to any one of claims 1-7, herein the inverter is an intelligent hybrid inverter.

9. An electrical energy storage system according to any one of claims 1-8, wherein the replenishable energy store is a rechargeable battery, optionally a lithium-ion battery, a nickel-cadmium battery, a lead-acid battery or a flow battery.

10. A control unit for an electrical energy storage system as defined in any one of claims 1-9.

11. A method of optimising energy efficiency in an electrical energy storage system as defined in any one of claims 1-9, wherein the control unit is configured to:
d) preferentially use the output of the renewable energy source to meet the predicted daily energy usage;
e) if the output of the renewable energy source exceeds the current energy usage, store the surplus output of the renewable energy source in the replenishable energy store until the state of charge of the replenishable energy store reaches a level equal to or in excess of the outstanding predicted daily energy usage; and
f) if the if the output of the renewable energy source exceeds the current energy usage, preferentially use the energy in the replenishable energy store over importing energy from the grid.

12. A method according to claim 11, wherein if the control unit predicts a deficit, the control unit is additionally configured to import energy from the grid during periods of reduced demand on the grid.

13. A method according to claim 11 or 12, wherein the control unit is configured to maximise the state of charge of the replenishable energy store in response to data indicating a potential disruption to the grid.

14. A method according to any one of claims 11 to 13, wherein the control unit is configured to preferentially export surplus energy to the grid at times of increased demand on the grid.

15. A method of maximising return from an electrical energy storage system as defined in any one of claims 1-9, wherein energy from the grid is supplied according to a differential tariff and the control unit is configured to:
c) preferentially export surplus energy from the renewable energy source and/or from the replenishable energy store to the grid during high tariff periods; and
d) preferentially import energy from the grid to meet the predicted daily energy usage and/or to replenish the replenishable energy store to the required state of charge during low tariff periods.

## Amended claims

### Amended claims in accordance with Rule 137(2) EPC.

1. An electrical energy storage system comprising:
• a renewable energy source (1);
• an inverter (2) for interconversion of direct current, DC, and mains frequency alternating current, AC;
• a replenishable energy store (3); and
• a connection to a mains power grid (4),
**characterised in that** the system further comprises a control unit (8) in communication with the inverter (2), wherein
a) the control unit (8) retrieves information from multiple external data sources;
b) the control unit (8) receives information from the inverter (2) in respect of output of the renewable energy source (1), the state of charge of the replenishable energy store (3), and energy usage;
c) the control unit (8) assesses the received information from a) and b);
d) the control unit (8) determines whether a predicted daily output of the renewable energy source (1) and the state of charge of the replenishable energy store (3) is sufficient to meet a predicted daily energy usage; and
e) the control unit (8) directs the inverter (2):
(i) if there is a predicted surplus, to store surplus energy in the replenishable energy store (3) and/or export energy to the grid (4);
(ii) if there is a predicted deficit, to import energy from the replenishable energy store (3) and/or the grid (4).

2. An electrical energy storage system according to claim 1, wherein external data sources include one or more of weather forecast data, solar forecast data, atmospheric data, regional data, postcode-specific data, and data in respect of the grid status.

3. An electrical energy storage system according to claim 1 or claim 2, wherein step a) is repeated every 15 minutes, every 30 minutes, every 45 minutes or every 60 minutes.

4. An electrical energy storage system according to any one of claims 1-3, wherein steps b) to e) are repeated at an interval in the range of every 30 seconds to every 5 minutes.

5. An electrical energy storage system according to any one of claims 1-4, wherein the control unit (8) is connected to and in communication with a remote server.

6. An electrical energy storage system according to claim 5, wherein the remote server collects and pools information from the control units of two or more energy storage systems and communicates the pooled data to each control unit (8).

7. An electrical energy storage system according to any one of claims 1-6, wherein the renewable energy source (1) is a photovoltaic array or a micro wind turbine.

8. An electrical energy storage system according to any one of claims 1-7, herein the inverter (2) is an intelligent hybrid inverter.

9. An electrical energy storage system according to any one of claims 1-8, wherein the replenishable energy store (3) is a rechargeable battery, optionally a lithium-ion battery, a nickel-cadmium battery, a lead-acid battery or a flow battery.

10. A control unit (8) for an electrical energy storage system as defined in any one of claims 1-9, wherein
a) the control unit (8) retrieves information from multiple external data sources;
b) the control unit (8) receives information from an inverter (2) in respect of output of a renewable energy source (1), the state of charge of a replenishable energy store (3), and energy usage;
c) the control unit (8) assesses the received information from a) and b);
d) the control unit (8) determines whether a predicted daily output of the renewable energy source (1) and the state of charge of the replenishable energy store (3) is sufficient to meet a predicted daily energy usage; and
e) the control unit (8) directs the inverter (2):
(i) if there is a predicted surplus, to store surplus energy in the replenishable energy store (3) and/or export energy to the grid (4);
(ii) if there is a predicted deficit, to import energy from the replenishable energy store (3) and/or the grid (4).

11. A method of optimising energy efficiency in an electrical energy storage system comprising:
• a renewable energy source (1);
• an inverter (2) for interconversion of direct current, DC, and mains frequency alternating current, AC;
• a replenishable energy store (3); and
• a connection to a mains power grid (4),
and further comprising a control unit (8) in communication with the inverter (2), wherein
a) the control unit (8) retrieves information from multiple external data sources;
b) the control unit (8) receives information from an inverter (2) in respect of output of a renewable energy source (1), the state of charge of a replenishable energy store (3), and energy usage;
c) the control unit (8) assesses the received information from a) and b);
d) the control unit (8) determines whether a predicted daily output of the renewable energy source (1) and the state of charge of the replenishable energy store (3) is sufficient to meet a predicted daily energy usage; and
e) the control unit (8) directs the inverter (2):
(i) if there is a predicted surplus, to store surplus energy in the replenishable energy store (3) and/or export energy to the grid (4);
(ii) if there is a predicted deficit, to import energy from the replenishable energy store (3) and/or the grid (4)
as defined in any one of claims 1-9, wherein the control unit (8) is configured to:
1) preferentially use the output of the renewable energy source (1) to meet the predicted daily energy usage;
2) if the output of the renewable energy source (1) exceeds the current energy usage, store the surplus output of the renewable energy source (1) in the replenishable energy store (3) until the state of charge of the replenishable energy store (3) reaches a level equal to or in excess of the outstanding predicted daily energy usage; and
3) if the if the output of the renewable energy source (1) exceeds the current energy usage, preferentially use the energy in the replenishable energy store (3) over importing energy from the grid (4).

12. A method according to claim 11, wherein if the control unit (8) predicts a deficit, the control unit (8) is additionally configured to import energy from the grid (4) during periods of reduced demand on the grid.

13. A method according to claim 11 or 12, wherein the control unit (8) is configured to maximise the state of charge of the replenishable energy store (3) in response to data indicating a potential disruption to the grid (4).

14. A method according to any one of claims 11 to 13, wherein the control unit (8) is configured to preferentially export surplus energy to the grid (4) at times of increased demand on the grid.

15. A method of maximising return from an electrical energy storage system comprising:
• a renewable energy source (1);
• an inverter (2) for interconversion of direct current, DC, and mains frequency alternating current, AC;
• a replenishable energy store (3); and
• a connection to a mains power grid (4),
and further comprising a control unit (8) in communication with the inverter (2), wherein
a) the control unit (8) retrieves information from multiple external data sources;
b) the control unit (8) receives information from an inverter (2) in respect of output of a renewable energy source (1), the state of charge of a replenishable energy store (3), and energy usage;
c) the control unit (8) assesses the received information from a) and b);
d) the control unit (8) determines whether a predicted daily output of the renewable energy source (1) and the state of charge of the replenishable energy store (3) is sufficient to meet a predicted daily energy usage; and
e) the control unit (8) directs the inverter:
(i) if there is a predicted surplus, to store surplus energy in the replenishable energy store (3) and/or export energy to the grid (4);
(ii) if there is a predicted deficit, to import energy from the replenishable energy store (3) and/or the grid (4)
as defined in any one of claims 1-9, wherein energy from the grid (4) is supplied according to a differential tariff and the control unit (8) is configured to:
1) preferentially export surplus energy from the renewable energy source (1) and/or from the replenishable energy store (3) to the grid (4) during high tariff periods; and
2) preferentially import energy from the grid (4) to meet the predicted daily energy usage and/or to replenish the replenishable energy store (3) to the required state of charge during low tariff periods.
